# FASCICULE DE BREVET EUROPEEN

(11) **EP 4 223 194 B1**
(45) Date de publication et mention de la délivrance du brevet: **28.08.2024**
(21) Numéro de dépôt: 23153597.2
(22) Date de dépôt: 27.01.2023
(51) Int. Cl.: A47L 9/02

(54) **ENSEMBLE POUR L'ASPIRATION DE POUSSIÈRES**
ANORDNUNG ZUM ABSAUGEN VON STAUB
DUST SUCTION ASSEMBLY

(30) Priorité: 04.02.2022 FR 2201016
(43) Date de publication de la demande: 09.08.2023
(73) Titulaire: BH2M, 90000 Belfort (FR)
(72) Inventeur: BRUNA, Sébastien, 70400 CHENEBIER (FR); AUZOLLE, Thierry, 90300 VALDOIE (FR); LEGRAND, Maxime, 90000 BELFORT (FR)
(74) Mandataire: Oudin, Stéphane

(56) Documents cités:
- EP-A1- 2 532 078
- EP-B1- 2 532 078
- WO-A1-2014/114924
- WO-A1-2018/196203
- US-A1- 2003 131 440

## Description

### Domaine technique

La présente invention concerne le domaine des machines électromécaniques, plus particulièrement le domaine des dispositifs d'aspiration de poussières pour les systèmes balai/collecteur.

### Technique antérieure

Dans les machines de type électromécanique, le courant électrique est transmis par frottement entre une partie fixe et une partie mobile. De manière générale, les systèmes utilisés comportent un porte-balai fixé sur une partie fixe maintenant un balai (également appelé brosse) conducteur d'électricité en appui sur une partie mobile. Le transfert de courant se fait au niveau du contact glissant entre le balai et l'autre partie (bague collectrice par exemple). Ce glissement, engendre l'érosion du balai et la formation de particules de poussières conductrices qui viennent polluer l'environnement du système. Cette poussière conductrice peut par accumulation engendrer des défauts diélectriques en abaissant les distances d'isolation au niveau de certaines parties des machines, et peut également endommager les paliers ou les parties en mouvement sur lesquelles elle se dépose. Pour empêcher cela, les opérateurs de ces machines mettent en place des plans de maintenance visant à réaliser des opérations de nettoyage difficiles et très fastidieuses. Ces opérations nécessitent de nombreux temps d'arrêt de production et s'avèrent inefficaces pour retirer la totalité de la pollution.

Pour pallier ces inconvénients, il est connu d'utiliser des systèmes de collecte de poussières du type buse reliés à une unité aspirante et présentant un logement central destiné à recevoir le balai de sorte à aspirer les poussières générées. Ce type de système est destinée à encapsuler le balai/porte-balai. L'inconvénient de ce type de système est qu'il est utilisable que pour un type de balai/porte-balai particulier (du fait de la dimension du logement qui est congruent avec la dimension du balai/porte-balai), il est donc difficilement intégrable à des machines existantes sans remplacer certains composants. De plus, pour espérer éliminer une grande partie de la pollution, il faut munir ce type de système d'unité d'aspiration ayant une grande puissance d'aspiration. L'efficacité de ce type de système reste ainsi très limitée.

Pour augmenter l'efficacité d'aspiration, certains systèmes de collecte de poussières disposent de conduits de soufflage d'air. L'air soufflé crée un vortex gazeux captant les poussières et facilitant leur évacuation par aspiration. Cependant, bien que plus efficaces, ils sont assez lourds à mettre en place puisqu'ils nécessitent une unité de soufflage et une unité d'aspiration ainsi que plusieurs connexions à des conduits différents du système. De plus, la puissance nécessaire pour l'évacuation des poussières reste élevée, ce qui a un impact financier important, et le système est très bruyant à l'utilisation.

Le document EP 2 532 078 A1 décrit un ensemble pour l'aspiration de poussières selon la préambule de la revendication 1.

### Exposé de l'invention

La présente invention a pour but de pallier les inconvénients précédemment cités en proposant un ensemble comprenant un dispositif pour l'aspiration de poussières de configuration simple, adaptable à plusieurs types de balais/porte-balais, présentant une efficacité d'évacuation de la poussière importante sans utilisation d'air soufflé.

Conformément à l'invention, il est donc proposé un ensemble pour l'aspiration de poussières générées par le frottement d'une extrémité d'un balai sur un collecteur au niveau d'une surface de contact, comprenant au moins un dispositif d'aspiration et un ensemble balai/porte-balai, ledit dispositif d'aspiration délimitant une ouverture intérieure adaptée pour recevoir l'extrémité de l'ensemble balai/porte-balai, et comportant au moins :
- une chambre gazeuse délimitée par une paroi tubulaire et s'étendant selon un plan de manière à former un anneau fermé de forme générale circulaire, ovoïde ou polygonale, ledit anneau délimitant l'ouverture intérieure,
- une ouverture de collecte s'étendant longitudinalement sur une partie de la paroi tubulaire destinée à faire face au collecteur,
- un conduit d'aspiration destiné à relier ladite au moins une chambre gazeuse à une unité d'aspiration, ledit dispositif d'aspiration étant remarquable en ce que l'ouverture intérieure est adaptée permettre un passage gazeux entre ledit ensemble balai/porte-balai et ledit dispositif d'aspiration et en ce que ladite ouverture de collecte est bordée par au moins une lèvre s'étendant de la chambre gazeuse en direction de l'ouverture intérieure de sorte à former un couloir étroit.

On appelle « lèvre » un rebord, un prolongement, une partie saillante, qui s'étend à partir du bord d'une ouverture.

Dans un premier mode de réalisation, le dispositif d'aspiration comporte plusieurs chambres gazeuses reliées ou non entre elles, et au moins un conduit d'aspiration reliant lesdites chambres gazeuses à au moins une unité d'aspiration, lesdites chambres gazeuses permettant d'aspirer simultanément les poussières générées par le frottement de plusieurs balais sur plusieurs bagues collectrices.

Dans un second mode de réalisation, le dispositif d'aspiration comporte une unique chambre gazeuse.

De manière préférée, au moins un passage gazeux est un volume libre de l'ouverture intérieure séparant l'ensemble balai/porte-balai et le dispositif d'aspiration.

Préférentiellement, au moins une chambre gazeuse s'étend dans le plan de manière à avoir une forme générale circulaire, ovoïde, rectangulaire ou carrée.

De manière avantageuse, au moins une chambre gazeuse peut être divisée en plusieurs compartiments, chaque compartiment présentant un conduit d'aspiration.

Avantageusement, au moins une ouverture de collecte a une forme de fente qui s'étend tout le long de la paroi tubulaire sur la partie de ladite paroi destinée à faire face au collecteur.

De manière préférée, l'ouverture de collecte est bordée par deux lèvres.

De manière encore plus préférée, la lèvre la plus proche de l'ouverture intérieure appelée lèvre interne a un profil incurvé qui se termine en pointe.

Avantageusement, au moins un conduit d'aspiration présente une section transversale qui a un diamètre plus grand au niveau de sa jonction avec la chambre gazeuse.

### Description sommaire des figures

D'autres avantages et caractéristiques ressortiront mieux de la description qui va suivre d'une variante d'exécution d'un ensemble pour l'aspiration de poussières selon l'invention en référence aux figures suivantes :
[Fig 1] est une vue de face de l'ensemble selon l'invention positionné sur un collecteur;
[Fig 2] est une vue de dessus du dispositif d'aspiration de l'ensemble selon l'invention;
[Fig 3] est une vue en coupe transversale du dispositif d'aspiration de l'ensemble selon l'invention.

### Meilleure manière de réaliser l'invention technique

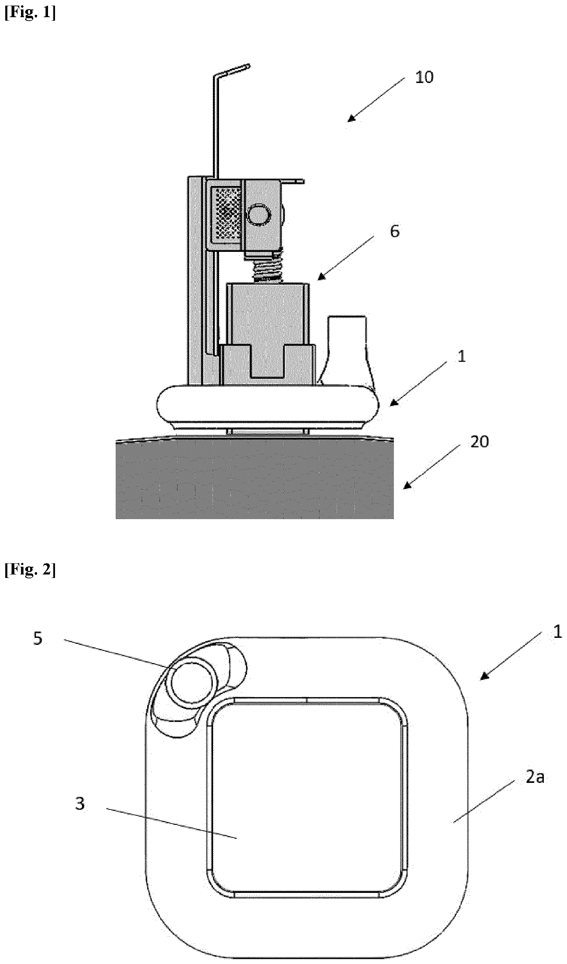

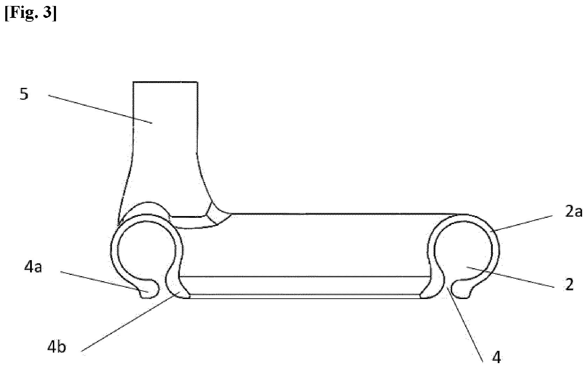

En référence des figures 1 à 3, il est donc proposé un ensemble 10 pour l'aspiration de poussières générées par le frottement d'une extrémité d'un balai sur un collecteur 20 au niveau d'une surface de contact, comprenant au moins un dispositif d'aspiration 1 et un ensemble balai/porte-balai 6, ledit dispositif d'aspiration 1 étant remarquable en ce qu'il délimite une ouverture intérieure 3 adaptée pour recevoir l'extrémité de l'ensemble balai/porte-balai 6 ainsi que pour permettre un passage gazeux entre ledit ensemble balai/porte-balai 6 et ledit dispositif d'aspiration 1, et en ce qu'il comporte au moins :
- une chambre gazeuse 2 délimitée par une paroi tubulaire 2a et s'étendant selon un plan de manière à former un anneau fermé de forme générale circulaire, ovoïde ou polygonale, ledit anneau délimitant l'ouverture intérieure 3,
- une ouverture de collecte 4 s'étendant longitudinalement sur une partie de la paroi tubulaire 2a destinée à faire face au collecteur 20, ladite ouverture de collecte 4 étant bordée par au moins une lèvre 4a, 4b s'étendant de la chambre gazeuse 2 en direction de l'ouverture intérieure 3 de sorte à former un couloir étroit,
- un conduit d'aspiration 5 destiné à relier ladite au moins une chambre gazeuse 2 à une unité d'aspiration.

Dans la présente demande, le terme "collecteur" désigne soit un jeu de bague(s) collectrice(s) également nommé collecteur à bagues, soit un collecteur à lames.

Le dispositif 1 est situé dans la périphérie proche de l'ensemble balai/porte-balai 6. Il entoure l'ensemble balai/porte-balai 6 sans entrer en contact directement avec lui. L'ouverture intérieure 3 ne doit pas constituer un logement congruent avec cet ensemble, la surface de l'ouverture doit permettre de recevoir l'ensemble balai/porte-balai 6 tout en laissant un passage gazeux entre le dispositif 1 et cet ensemble 6. Ce passage gazeux est un espace libre permettant au gaz de circuler entre l'ensemble balai/porte-balai 6 et le dispositif 1 (ainsi l'ensemble balai/porte-balai 6 n'est pas encapsulé dans le dispositif 1). Par gaz, on désigne le gaz qui règne dans l'environnement ambiant de l'ensemble 6, il pourra s'agir d'air ou de tout autre gaz. Dans le reste de la description, on se placera dans le cas où le gaz est l'air.

La mise en route de l'unité d'aspiration entraîne une circulation d'air, l'air ambiant s'engouffre entre l'ensemble balai /porte-balai 6 et le dispositif 1, ce qui crée une surpression dans la zone de couloir, cette surpression a un effet « barrière », empêchant les poussières générées par le balai de se répandre. Les poussières maintenues dans une zone à proximité de l'ensemble balai/porte-balai 6 sont entraînées par le flux d'air et guidées grâce à au moins une lèvre 4a, 4b vers le centre de la chambre gazeuse 2. Les parois incurvées 2a de la chambre gazeuse 2 permettent à ce flux de former un tourbillon, ce tourbillon se déplace dans la chambre 2 jusqu'au conduit d'aspiration 5. Cet effet tourbillon a pour avantage d'éviter que les poussières se déposent à l'intérieur du dispositif 1 et de permettre leur guidage vers le conduit d'aspiration 5 où elles seront ensuite complètement évacuées. Les dimensions de la chambre 2, le profil de la lèvre 4a, 4b, la largeur du passage gazeux, la largeur du couloir sont choisies en fonction de la vitesse de glissement ou de frottement entre l'ensemble balai/porte-balai 6 et le collecteur 20 et des dimensions de cet ensemble 6. En effet, afin d'obtenir l'efficacité d'aspiration désirée, il faut éviter que le flux d'air généré par le collecteur 20 ne perturbe la circulation d'air initiée par l'unité d'aspiration. Ces choix peuvent s'appuyer sur des analyses numériques.

En coupe transversale, la paroi tubulaire 2a de la chambre gazeuse 2 aura une forme de cercle ou d'ovale ouvert sur l'ouverture de collecte 4. Cette morphologie incurvée de la paroi tubulaire 2a, permet d'éviter que les poussières aspirées ne se déposent sur celle-ci.

Du fait que l'ouverture intérieure 3 ne constitue pas un logement congruent avec l'ensemble balai/porte-balai 6, un même dispositif 1 peut convenir à plusieurs ensembles balai/porte-balai 6 de dimensions différentes.

La fixation du dispositif 1 se fait par l'intermédiaire de ressorts et/ou de clips et/ou de pattes de fixation. Ceci permet d'installer rapidement le dispositif 1 sur un porte-balai existant et facilite également les opérations de maintenance (intervention courte et donc peu coûteuse pour installer le dispositif 1). Ce système de fixation a également pour avantage de permettre d'installer le dispositif 1 sur un ensemble balai/porte-balai 6 d'une machine déjà en fonctionnement sans avoir à remplacer les composants (ensemble balai/porte-balai...) déjà existants. Par ailleurs, les systèmes de fixation par ressorts ou clips, permettent de découpler le dispositif 1 de l'ensemble balai/porte-balai 6 et ainsi d'éviter de transmettre les éventuelles vibrations engendrées par le fonctionnement de l'ensemble balai/porte-balai 6 au dispositif d'aspiration 1.

La largeur du couloir peut varier en fonction de l'efficacité de l'aspiration voulue. Ce choix devra tenir compte de plusieurs paramètres : vitesse du collecteur 20, matière des balais (les poussières générées seront de tailles différentes en fonction de la matière du balai), puissance de l'unité d'aspiration...Cette largeur sera préférentiellement choisie dans une plage de valeurs comprise entre 1 et 12mm. Encore plus préférentiellement, entre 1 et 10mm. Ce couloir permet de répartir l'effet « barrière » tout autour de la chambre 2 et ceci quel que soit la position du conduit d'aspiration 5. Ceci a pour avantage de pouvoir disposer le conduit d'aspiration 5 n'importe où au niveau de la chambre 2, ce qui permet d'adapter le dispositif 1 à tout type de machine.

La au moins une ouverture de collecte 4 s'étend longitudinalement sur toute la paroi tubulaire 2a, c'est-à-dire longitudinalement sur toute la longueur de la chambre 2 en suivant la forme générale de celle-ci. L'ouverture de collecte 4 pourra être un ensemble de plusieurs ouvertures disposées à proximité en suivant la longueur de la chambre 2 ou une seule ouverture sur toute la longueur de la chambre 2. Une ouverture de collecte 4 en une seule ouverture a pour avantage une répartition homogène de la force d'aspiration et donc une circulation d'air tout autour de l'ensemble balai/porte-balai 6.

Avantageusement, le passage gazeux est équipé d'un ou plusieurs déflecteurs. Ces déflecteurs ont pour avantage de canaliser le flux d'air circulant dans le passage gazeux entre le dispositif 1 et l'ensemble balai/porte-balai 6. L'usage de déflecteurs permet de maîtriser l'angle d'incidence du flux d'air avec la surface de glissement (surface de contact entre le balai et le collecteur 20). Ces déflecteurs pourront servir par exemple, à modifier avantageusement la surface extérieure de l'ensemble balai/porte-balai 6 de manière à optimiser la circulation d'air au niveau du passage gazeux. Cet angle joue un rôle dans la création de l'effet « barrière ».

Dans un premier mode de réalisation, le dispositif d' aspiration 1 comporte plusieurs chambres gazeuses 2 reliées ou non entre elles, et au moins un conduit d'aspiration 5 reliant lesdites chambres gazeuses 2 à au moins une unité d'aspiration, lesdites chambres gazeuses 2 permettant d'aspirer simultanément les poussières générées par le frottement de plusieurs balais sur plusieurs bagues collectrices 20. Ce type de dispositif 1 permet de prendre en charge l'aspiration des poussières générées par plusieurs ensembles balai/porte-balai 6 à proximité. Un ou plusieurs conduits d'aspiration 5 sont répartis sur le dispositif 1. Si la puissance d'aspiration n'est pas suffisante, il sera possible de compartimenter les différentes chambres 2, et de relier les différents compartiments à une unité d'aspiration.

Dans un second mode de réalisation, le dispositif d'aspiration 1 comporte une unique chambre gazeuse 2. Dans ce mode de réalisation, le dispositif 1 est adapté pour aspirer les poussières générées par un ensemble balai/porte-balai 6. Il sera également possible de dimensionner le dispositif 1 pour qu'il accueille dans son ouverture intérieure 3 plusieurs ensembles balai/porte-balai 6.

De manière préférée, au moins un passage gazeux est un volume libre de l'ouverture intérieur 3 séparant l'ensemble balai/porte-balai 6 et le dispositif d'aspiration 1.

Préférentiellement, au moins une chambre gazeuse 2 s'étend dans le plan de manière à avoir une forme générale circulaire, ovoïde, rectangulaire ou carrée. Pour les formes présentant des angles, ceux-ci sont préférentiellement arrondis afin de faciliter la circulation de gaz. La forme générale et les dimensions de la chambre gazeuse 2 sont préférentiellement choisies en fonction de la forme et des dimensions de l'ensemble balai/porte-balai 6. Le dispositif 1 est préférentiellement en matériaux polymères mais il peut également être fabriqué en tout matériau adapté pour l'application voulue. Du fait de sa forme complexe, le dispositif 1 est préférentiellement réalisé par moulage, soufflage ou procédé d'impression en trois dimensions. Le matériau choisi est de préférence électriquement isolant et permettra d'assurer un bon fonctionnement du système dans les conditions de température et de sollicitations mécaniques de la machine. Le polyamide chargé fibre de verre dispose des caractéristiques mécaniques et thermiques répondant à ces conditions et présente également l'avantage de pouvoir être mise en oeuvre au moyen de procédé d'impression en trois dimensions comme le frittage laser.

De manière avantageuse, au moins une chambre gazeuse 2 peut être divisée en plusieurs compartiments, chaque compartiment présentant un conduit d'aspiration 5. Ceci permet de concentrer une même puissance d'aspiration sur un espace moins important (compartiment plutôt que chambre entière) et donc d'augmenter l'effet barrière. Il est possible également de choisir de connecter certains compartiments et pas d'autres à une unité d'aspiration en fonction des besoins, en connectant ou non le conduit d'aspiration 5 du compartiment à une unité d'aspiration. Dans le cas d'un dispositif 1 comportant une seule chambre 2 adaptée pour recevoir plusieurs ensembles balai/porte-balais 6, cette chambre 2 peut être compartimentée pour augmenter la puissance d'aspiration (et donc l'effet barrière) et assurer une aspiration plus efficace.

Avantageusement, au moins une ouverture de collecte 4 a une forme de fente qui s'étend tout le long de la paroi tubulaire 2a sur la partie de ladite paroi 2a destinée à faire face au collecteur 20. L'ouverture de collecte s'étend tout le long de la paroi tubulaire et en suit le contour. Dans le cas d'une chambre gazeuse en forme d'anneau circulaire, l'ouverture 4 sera un cercle. Cette ouverture 4 sera sur la partie de la paroi tubulaire 2a destinée à faire face au collecteur 20 de sorte à être au plus près de la zone de formation des poussières. L'ouverture de collecte 4 peut cependant prendre toute forme adaptée à l'application : plusieurs fentes disposées longitudinalement tout le long de la paroi tubulaire, ouvertures circulaires etc... L'ouverture de collecte 4 s'étend longitudinalement sur toute la paroi tubulaire 2a, c'est-à-dire longitudinalement sur toute la longueur de la chambre 2 en suivant la forme générale de celle-ci. Ceci a pour avantage une répartition homogène de la force d'aspiration et donc une circulation d'air tout autour de l'ensemble balai/porte-balai 6.

De manière plus avantageuse, l'ouverture de collecte 4 est bordée par deux lèvres 4a, 4b. Ces deux lèvres 4a, 4b se forment sur les bords de la fente (chaque lèvre vient prolonger un bord) et permettent la formation d'un couloir étroit qui prolonge la chambre gazeuse. Au moins, une de ces lèvres 4a, 4b est orientée vers l'ouverture intérieure 3.

Que le dispositif présente une ou deux lèvres 4a, 4b, l'angle formé entre au moins une lèvre 4a, 4b et le plan défini par la surface de contact entre le balai et le collecteur 20, est sensiblement compris entre 15 et 80 °. Préférentiellement, cet angle est compris entre 20 et 75°. Cet angle peut être différent à différents endroits de la lèvre 4a, 4b tout au long de la chambre gazeuse 2. Le choix d'angle sera effectué en fonction des conditions de rotation du collecteur 20.

De manière encore plus avantageuse, la lèvre 4b la plus proche de l'ouverture intérieure 3 appelée lèvre interne 4b a un profil incurvé qui se termine en pointe.

Chacune des lèvre 4a, 4b peut avoir un profil différent. La morphologie incurvée de la lèvre interne 4b facilite la circulation d'air venant de l'ouverture intérieure 3, en minimisant les pertes de charge.

Préférentiellement, l'autre lèvre 4a donnant sur l'extérieur du dispositif, peut avoir un profil plus bombé et se terminer sur un profil qui s'aplatie selon un plan parallèle à la surface de glissement (surface de contact entre le balai et le collecteur). Ceci permet de créer une perte de charge importante et d'empêcher les poussières de s'échapper. Cette partie aplatie s'étend avantageusement sur quelques millimètres selon un plan parallèle à la surface de glissement.

De manière préférentielle, le dispositif 1 est placé à une distance comprise entre 1 et 3 mm du collecteur 20. Cette distance permet d'éviter d'entrer en contact avec le collecteur 20 en rotation tout en assurant une aspiration au plus près de la zone de génération des poussières.

Avantageusement, au moins un conduit d'aspiration 5 présente une section transversale qui a un diamètre plus grand au niveau de sa jonction avec la chambre gazeuse 2.

De manière encore plus avantageuse, au moins conduit d'aspiration 5 est positionné sur la chambre 2 à l'opposé des lèvres 4a, 4b et de l'ouverture de collecte 4.

L'invention concerne également, un dispositif d' aspiration 1 de poussières générées par le frottement d'une extrémité d'un balai sur un collecteur 20 remarquable en ce qu'il comporte au moins :
- une chambre gazeuse 2 délimitée par une paroi tubulaire 2a et s'étendant selon un plan de manière à former un anneau fermé de forme générale circulaire, ovoïde ou polygonale, ledit anneau délimitant l'ouverture intérieure 3,
- une ouverture de collecte 4 s'étendant longitudinalement sur une partie de la paroi tubulaire 2a destinée à faire face au collecteur 20, ladite ouverture de collecte 4 étant bordée par au moins une lèvre 4a, 4b s'étendant de la chambre gazeuse 2 en direction de l'ouverture intérieure 3 de sorte à former un couloir étroit,
- un conduit d'aspiration 5 destiné à relier ladite au moins une chambre gazeuse 2 à une unité d'aspiration.

Plusieurs tests montrent que le dispositif d'aspiration 1 et l'ensemble 10 selon l'invention sont particulièrement efficaces. En effet, pour une vitesse de glissement de 10 m.s-1, la puissance d'aspiration nécessaire pour 40 ensembles balai/porte-balai est de 3kW et l'efficacité d'aspiration dépasse les 80%.

L'efficacité de ce dispositif d'aspiration n'est pas liée à sa proximité physique avec l'ensemble balai/porte-balai 6 mais à sa capacité à guider la circulation de l'air.

### Possibilité d'application industrielle

L'ensemble 10 selon l'invention trouve son application particulière dans l'industrie des machines électromécaniques pour évacuer la poussière générée par le frottement de composants du type balai /collecteur 20 par exemple, mais il peut également être utilisé pour d'autres types de composants. Enfin, il va de soi que les exemples d'ensembles conformes à l'invention qui vient d'être décrite, ne sont que des illustrations particulières, en aucun cas limitatives de l'invention.

## Revendications

1. Ensemble (10) pour l'aspiration de poussières générées par le frottement d'une extrémité d'un balai sur un collecteur (20) au niveau d'une surface de contact, comprenant au moins un dispositif d'aspiration (1) et un ensemble balai/porte-balai (6), ledit dispositif d'aspiration (1) délimitant une ouverture intérieure (3) adaptée pour recevoir l'extrémité de l'ensemble balai/porte-balai (6), et comportant au moins :
- une chambre gazeuse (2) délimitée par une paroi tubulaire (2a) et s'étendant selon un plan de manière à former un anneau fermé de forme générale circulaire, ovoïde ou polygonale, ledit anneau délimitant l'ouverture intérieure (3),
- une ouverture de collecte (4) s'étendant longitudinalement sur une partie de la paroi tubulaire (2a) destinée à faire face au collecteur (20), et
- un conduit d'aspiration (5) destiné à relier ladite au moins une chambre gazeuse (2) à une unité d'aspiration, ledit dispositif d'aspiration (1) étant **caractérisé en ce que** l'ouverture intérieure (3) est adaptée pour permettre un passage gazeux entre ledit ensemble balai/porte-balai (6) et ledit dispositif d'aspiration (1) et **en ce que** ladite ouverture de collecte (4) est bordée par au moins une lèvre (4a, 4b) s'étendant de la chambre gazeuse (2) en direction de l'ouverture intérieure (3) de sorte à former un couloir étroit.

2. Ensemble (10) selon la revendication 1, **caractérisé en ce que** le dispositif d'aspiration (1) comporte plusieurs chambres gazeuses (2) reliées ou non entre elles, et au moins un conduit d'aspiration (5) reliant lesdites chambres gazeuses (2) à au moins une unité d'aspiration, lesdites chambres gazeuses (2) permettant d'aspirer simultanément les poussières générées par le frottement de plusieurs balais sur plusieurs bagues collectrices (20).

3. Ensemble (10) selon la revendication 1, **caractérisé en ce que** le dispositif d'aspiration (1) comporte une unique chambre gazeuse (2).

4. Ensemble (10) selon l'une quelconque des revendications précédentes, **caractérisé en ce qu'**au moins un passage gazeux est un volume libre de l'ouverture intérieure (3) séparant l'ensemble balai/porte-balai (6) et le dispositif d'aspiration (1).

5. Ensemble (10) selon l'une quelconque des revendications précédentes, **caractérisé en ce qu'**au moins une chambre gazeuse (2) s'étend dans le plan de manière à avoir une forme générale circulaire, ovoïde, rectangulaire ou carrée.

6. Ensemble (10) selon l'une quelconque des revendications précédentes, **caractérisé en ce qu'**au moins une chambre gazeuse (2) peut être divisée en plusieurs compartiments, chaque compartiment présentant un conduit d'aspiration (5).

7. Ensemble (10) selon l'une quelconque des revendications précédentes, **caractérisé en ce qu'**au moins une ouverture de collecte (4) a une forme de fente qui s'étend tout le long de la paroi tubulaire (2a) sur la partie de ladite paroi (2a) destinée à faire face au collecteur (20).

8. Ensemble (10) selon la revendication précédente, **caractérisé en ce que** l'ouverture de collecte (4) est bordée par deux lèvres (4a, 4b).

9. Ensemble (10) selon la revendication précédente **caractérisé en ce que** la lèvre (4b) la plus proche de l'ouverture intérieure (3) appelée lèvre interne (4b) a un profil incurvé qui se termine en pointe.

10. Ensemble (10) selon l'une quelconque des revendications précédentes, **caractérisé en ce qu'**au moins un conduit d'aspiration (5) présente une section transversale qui a un diamètre plus grand au niveau de sa jonction avec la chambre gazeuse (2).

## Patentansprüche

1. Anordnung (10) zum Aufsaugen von Staub, der durch das Reiben eines Bürstenendes an einem Sammelbehälter (20) an einer Kontaktfläche erzeugt wird, umfassend mindestens eine Saugvorrichtung (1) und eine Bürsten-/Bürstenhalteranordnung (6), wobei die Saugvorrichtung (1) eine innere Öffnung (3) begrenzt, die dazu ausgelegt ist, das Ende der Bürsten-/Bürstenhalteranordnung (6) aufzunehmen, und mindestens Folgendes umfasst:
- eine Gaskammer (2), die durch eine rohrförmige Wand (2a) begrenzt wird und sich entlang einer Ebene erstreckt, um einen geschlossenen Ring mit allgemeiner kreisförmiger, eiförmiger oder polygonaler Form zu bilden, wobei der Ring die innere Öffnung (3) begrenzt,
- eine Sammelöffnung (4), die sich in Längsrichtung über einen Teil der rohrförmigen Wand (2a) erstreckt, der dazu bestimmt ist, dem Sammelbehälter (20) zugewandt zu sein, und
- einen Saugkanal (5), der dazu bestimmt ist, die mindestens eine Gaskammer (2) mit einer Saugeinheit zu verbinden,
wobei die Saugvorrichtung (1) **dadurch gekennzeichnet ist, dass** die innere Öffnung (3) dazu ausgelegt ist, einen Gasdurchgang zwischen der Bürsten-/Bürstenhalteranordnung (6) und der Saugvorrichtung (1) zu ermöglichen, und dass die Sammelöffnung (4) von mindestens einer Lippe (4a, 4b) umgeben ist, die sich von der Gaskammer (2) in Richtung der inneren Öffnung (3) erstreckt, um einen schmalen Korridor zu bilden.

2. Anordnung (10) nach Anspruch 1, **dadurch gekennzeichnet, dass** die Saugvorrichtung (1) mehrere Gaskammern (2), die miteinander verbunden sind oder nicht, und mindestens einen Saugkanal (5) umfasst, der die Gaskammern (2) mit mindestens einer Saugeinheit verbindet, wobei die Gaskammern (2) das gleichzeitige Aufsaugen des Staubs ermöglichen, der durch das Reiben mehrerer Bürsten an mehreren Schleifringen (20) erzeugt wird.

3. Anordnung (10) nach Anspruch 1, **dadurch gekennzeichnet, dass** die Saugvorrichtung (1) eine einzige Gaskammer (2) umfasst.

4. Anordnung (10) nach einem der vorhergehenden Ansprüche, **dadurch gekennzeichnet, dass** mindestens ein Gasdurchgang ein freies Volumen der inneren Öffnung (3) ist, das die Bürsten-/Bürstenhalteranordnung (6) und die Saugvorrichtung (1) trennt.

5. Anordnung (10) nach einem der vorhergehenden Ansprüche, **dadurch gekennzeichnet, dass** sich mindestens eine Gaskammer (2) in der Ebene derart erstreckt, dass sie eine allgemeine kreisförmige, eiförmige, rechteckige oder quadratische Form hat.

6. Anordnung (10) nach einem der vorhergehenden Ansprüche, **dadurch gekennzeichnet, dass** mindestens eine Gaskammer (2) in mehrere Fächer unterteilt werden kann, wobei jedes Fach einen Saugkanal (5) aufweist.

7. Anordnung (10) nach einem der vorhergehenden Ansprüche, **dadurch gekennzeichnet, dass** mindestens eine Sammelöffnung (4) die Form eines Schlitzes hat, der sich entlang der gesamten rohrförmigen Wand (2a) auf dem Teil der Wand (2a) erstreckt, der dazu bestimmt ist, dem Sammelbehälter (20) zugewandt zu sein.

8. Anordnung (10) nach dem vorhergehenden Anspruch, **dadurch gekennzeichnet, dass** die Sammelöffnung (4) von zwei Lippen (4a, 4b) umgeben ist.

9. Anordnung (10) nach dem vorhergehenden Anspruch, **dadurch gekennzeichnet, dass** die der inneren Öffnung (3) am nächsten liegende Lippe (4b), bezeichnet als Innenlippe (4b), ein gekrümmtes Profil hat, das in einer Spitze endet.

10. Anordnung (10) nach einem der vorhergehenden Ansprüche, **dadurch gekennzeichnet, dass** mindestens ein Saugkanal (5) einen Querschnitt aufweist, der an seiner Verbindung mit der Gaskammer (2) einen größeren Durchmesser hat.

## Claims

1. Assembly (10) for the suction of dust generated by the friction of an end of a brush on a collector (20) at a contact surface, comprising at least one suction device (1) and a brush/brush holder assembly (6), said suction device (1) delimiting an inner opening (3) adapted to receive the end of the brush/brush holder assembly (6), and including at least:
- one gaseous chamber (2) delimited by a tubular wall (2a) and extending along a plane so as to form a closed ring with a general circular, ovoid or polygonal shape, said ring delimiting the inner opening (3),
- one collection opening (4) extending longitudinally over a part of the tubular wall (2a) intended to face the collector (20), and
- one suction duct (5) intended to connect said at least one gaseous chamber (2) to a suction unit,
said suction device (1) being **characterized in that** the inner opening (3) is adapted to allow a gaseous passage between said brush/brush holder assembly (6) and said suction device (1) and **in that** said collection opening (4) is bordered by at least one lip (4a, 4b) extending from the gaseous chamber (2) in the direction of the inner opening (3) so as to form a narrow corridor.

2. Assembly (10) according to claim 1, **characterized in that** the suction device (1) includes several gaseous chambers (2) connected to each other or not, and at least one suction duct (5) connecting said gaseous chambers (2) to at least one suction unit, said gaseous chambers (2) allowing simultaneously sucking up the dust generated by the friction of several brushes on several slip rings (20).

3. Assembly (10) according to claim 1, **characterized in that** the suction device (1) includes a single gaseous chamber (2).

4. Assembly (10) according to any one of the preceding claims, **characterized in that** at least one gaseous passage is a free volume of the inner opening (3) separating the brush/brush holder assembly (6) and the suction device (1).

5. Assembly (10) according to any one of the preceding claims, **characterized in that** at least one gaseous chamber (2) extends in the plane so as to have a general circular, ovoid, rectangular or square shape.

6. Assembly (10) according to any one of the preceding claims, **characterized in that** at least one gaseous chamber (2) can be divided into several compartments, each compartment having a suction duct (5).

7. Assembly (10) according to any one of the preceding claims, **characterized in that** at least one collection opening (4) has a slot shape that extends along the full length of the tubular wall (2a) on the part of said wall (2a) intended to face the collector (20) .

8. Assembly (10) according to the preceding claim, **characterized in that** the collection opening (4) is bordered by two lips (4a, 4b).

9. Assembly (10) according to the preceding claim, **characterized in that** the lip (4b) closest to the inner opening (3) called inner lip (4b) has a curved profile that ends in a point.

10. Assembly (10) according to any one of the preceding claims, **characterized in that** at least one suction duct (5) has a cross-section that has a greater diameter at the junction thereof with the gaseous chamber (2) .
